# EUROPÄISCHE PATENTANMELDUNG

(11) **EP 0 885 973 A1**
(43) Veröffentlichungstag der Anmeldung: **23.12.1998**
(21) Anmeldenummer: 98250138.9
(22) Anmeldetag: 21.04.1998
(51) Int. Cl.: C21C 5/36, C21B 3/08, C04B 18/14

(54) **Verfahren zum Stückigmachen von im Stahlherstellungsprozess anfallender Schlacke**

(30) Priorität: 15.05.1997 DE 19721274
(71) Anmelder: MANNESMANN Aktiengesellschaft, 40213 Düsseldorf (DE)
(72) Erfinder: Kaiser, Heinz-Peter, Dr., 47506 Neukirchen-Vluyn (DE); Höning, Manfred, Dipl.-Ing., 47509 Rheurdt (DE); Schlüter, Thomas, Dr., 47259 Duisburg (DE)
(74) Vertreter: Meissner, Peter E., Dipl.-Ing.

(57) **Zusammenfassung**

Die Erfindung betrifft ein Verfahren zum Stückigmachen von im Stahlherstellungsprozeß anfallender Schlacke, bei dem die Schlacke im flüssigen Zustand mittels Luft verblasen wird, und zwar wird Schlacke vom Konverterprozeß oder Schlacke von der sekundärmetallurgischen Behandlung in einem Temperaturbereich von 1300 - 1600 °C verblasen.

## Beschreibung

Die Erfindung betrifft ein Verfahren zum Stückigmachen von im Stahlherstellungsprozeß anfallender Schlacke.

Ein gattungsbildendes Verfahren ist bekannt aus Nippon Steel Technical Report No. 17, June 1981, S. 41 - 47. Bei diesem Verfahren wird die beim Hochofenprozeß anfallende Schlacke mittels eines Schlackewagens einer Granulierungsanlage zugeführt. Die flüssige Schlacke wird in einen Verteiler gegossen und gegen die vom Verteiler austretende Schlacke ein Luftstrom gerichtet. Die dabei entstehenden Schlacketeilchen prallen gegen eine wassergekühlte Platte und fallen auf ein Rüttelblech. Von dort werden die Teilchen mittels Luft über einen Flachförderer einem Abscheider zugeführt, der Gas und Feststoff voneinander trennt. Die so gewonnenen Teilchen werden als Füllstoffe dem Straßenbau und bei der Betonfertigung zugeführt.

Aufgabe der Erfindung ist es, ein gattungsmäßiges Verfahren zum Stückigmachen von im Stahlherstellungsprozeß anfallender Schlacke anzugeben, mit dem eine für andere Verwendungszwecke stückiggemachte Schlacke erzeugbar ist.

Diese Aufgabe wird dadurch gelöst, daß Schlacke vom Konverterprozeß oder Schlacke von der sekundärmetallurgischen Behandlung in einem Temperaturbereich von 1300 - 1600 °C verblasen wird.
Die erkaltete Schlacke wird entweder zuvor auf Schmelztemperatur erhitzt oder es wird die direkt aus dem Behandlungsgefäß, z. B. Konverter auslaufende Schlacke verblasen. Für das Verblasen wird Luft verwendet, da hierfür nur ein Gebläse erforderlich ist. Der Luftstrom liegt im wesentlichen senkrecht zum auslaufenden Schlackenstrahl oder schließt mit diesem einen spitzen Winkel ein. Die Teilchen werden in einem Behälter oder in einer Umhausung aufgefangen und abtransportiert. Zweckmäßigerweise ist die Umhausung mit einem die herabgefallenen Teilchen zusammenkehrenden Mittel, z. B. kombinierte Schiebe-Besenvorrichtung versehen. Der Vorteil des vorgeschlagenen Verfahrens ist darin zu sehen, daß die durch das Verblasen entstandenen kleinen Schlackekugeln als Strahlmittel zum
Oberflächenreinigen verzunderter oder verschmutzter Teile verwendet werden können und über den Verkauf die für das Verfahren aufzuwendenden Kosten mehr als ausgeglichen werden. Die ansonsten erforderlichen Aufarbeitungskosten oder Deponiegebühren entfallen bei diesem Verfahren. Da die Schlackekugeln hart sind, können sie als Strahlmittel mehrfach verwendet werden, wobei das abgestrahlte Material aus dem Strahlmittel entfernt wird, beispielsweise durch Naßfiltern.

Das vorgeschlagene Verfahren ist generell anwendbar für jede Art von Hüttenwerksschlacke. Dabei kann es sich um Schlacke beim Blasverfahren im Konverter oder um Schlacke aus der Pfanne bei der sekundärmetallurgischen Behandlung oder um Schlacke beim Elektroofenprozeß oder um Hochofenschlacke handeln.

## Patentansprüche

1. Verfahren zum Stückigmachen von im Stahlherstellungsprozeß anfallender Schlacke, bei dem die Schlacke im flüssigen Zustand mittels Luft verblasen wird,
dadurch gekennzeichnet,
daß Schlacke vom Konverterprozeß oder Schlacke von der sekundärmetallurgischen Behandlung in einem Temperaturbereich von 1300 - 1600 °C verblasen wird.

2. Verfahren nach Anspruch 1,
dadurch gekennzeichnet,
daß die erkaltete Schlacke zuvor auf Schmelztemperatur erhitzt wird.

3. Verfahren nach Anspruch 2,
dadurch gekennzeichnet,
daß die abzuziehende flüssige Schlacke direkt verblasen wird.

4. Verwendung einer stückiggemachten Schlacke gemäß dem Verfahren nach Patentanspruch 1 als Strahlmittel zum Oberflächenreinigen verzunderter oder verschmutzter Teile.
